# EUROPEAN PATENT APPLICATION

(11) **EP 4 521 817 A1**
(43) Date of publication of application: **12.03.2025**
(21) Application number: 23799211.0
(22) Date of filing: 27.04.2023
(51) Int. Cl.: H04W 28/06

(54) **DATA PROCESSING METHOD AND DEVICE, STORAGE MEDIUM, AND ELECTRONIC DEVICE**

(30) Priority: 05.05.2022 CN 202210480830
(71) Applicant: ZTE Corporation, Shenzhen, Guangdong 518057 (CN)
(72) Inventor: XIN, Yu, Shenzhen, Guangdong 518057 (CN); YU, Guanghui, Shenzhen, Guangdong 518057 (CN); HUA, Jian, Shenzhen, Guangdong 518057 (CN); BAO, Tong, Shenzhen, Guangdong 518057 (CN); XU, Jin, Shenzhen, Guangdong 518057 (CN); HU, Liujun, Shenzhen, Guangdong 518057 (CN)
(74) Representative: Novagraaf Technologies
(86) International application number: PCT/CN2023/091309
(87) International publication number: WO 2023/213225

(57) **Abstract**

Embodiments of the present invention provide a data processing method and apparatus, a storage medium and an electronic apparatus. The method includes: dividing data to be transmitted into G groups, wherein each group respectively includes D(g) subgroups, each of the subgroups includes one or more pieces of data, g is an identifier corresponding to each group, g = 1, 2, ..., G, and D(g)>= 1; respectively performing first processing on the D(g) subgroups in each group to obtain D(g) groups of first data sequences; performing second processing on the D(g) groups of first data sequences in each group to obtain a second data sequence of each group; and transmitting G groups of the second data sequences. By means of some embodiments of the present invention, the problem of transmission interference in the related art can be solved.

## Description

### Technical Field

Embodiments of the present invention relate to the field of communications, and in particular, to data processing method and apparatus, storage medium and electronic apparatus.

### Background

In the communication technology of Fifth Generation New Radio (5G NR for short), when data transmission is performed, an interference problem exists between adjacent subbands. In order to solve the interference problem, a more direct method is to insert a protection bandwidth between two transmission bands with different Numerology, but this will waste frequency resources.

In addition, in the future development of communication, the frequency band span required to be used will become larger and larger, and the deployment manner will also become more and more; therefore, more bandwidth channels will be required; therefore, there is still a transmission interference problem in the future data transmission, and no effective solution has been proposed for this problem.

### Summary

Embodiments of the present invention provide a data processing method and apparatus, a storage medium, and an electronic apparatus, so as to at least solve the transmission interference problem in the related art.

According to some embodiments of the present invention, providing a data processing method, including: data to be transmitted is divided into G groups, wherein each group respectively includes D(g) subgroups, each of the subgroups includes one or more pieces of data, g is an identifier corresponding to each group, g = 1, 2, ..., G, and D(g)>= 1; first processing is respectively performed on the D(g) subgroups in each group to obtain D(g) groups of first data sequences; second processing is performed on the D(g) groups of first data sequences in each group to obtain a second data sequence of each group; and G groups of the second data sequences are transmitted.

According to some other embodiments of the present invention, providing a data processing apparatus, including: a grouping module, configured to divide data to be transmitted into G groups, wherein each group respectively includes D(g) subgroups, each of the subgroups includes one or more pieces of data, g is an identifier corresponding to each group, g = 1, 2, ..., G, and D(g)>= 1; a first processing module, configured to respectively perform first processing on the D(g) subgroups in each group to obtain D(g) groups of first data sequences; a second processing module, configured to perform second processing on the D(g) groups of first data sequences in each group to obtain a second data sequence of each group; and a transmission module, configured to transmit G groups of the second data sequences.

According to still some other embodiments of the present invention, providing a computer-readable storage medium storing a computer program, wherein the computer program is configured to execute the steps in any one of the method embodiments when running.

According to still some other embodiments of the present invention, providing an electronic apparatus, including a memory and a processor, wherein the memory stores a computer program, and the processor is configured to run the computer program to execute the steps in any one of the method embodiments.

### Brief Description of the Drawings

Fig. 1 is a structural block diagram of hardware of a mobile terminal for a data processing method according to embodiments of the present invention;
Fig. 2 is a flowchart of a data processing method according to embodiments of the present invention;
Fig. 3 is a schematic diagram of data transmission according to a specific embodiment 1 of the present invention;
Fig. 4 is a schematic diagram of data transmission according to a specific embodiment 2 of the present invention;
Fig. 5 is a schematic diagram of data transmission according to a specific embodiment 2 of the present invention; and
Fig. 6 is a structural block diagram of a data processing apparatus according to embodiments of the present invention.

### Detailed Description of the Embodiments

Hereinafter, embodiments of the present invention are described in detail with reference to the accompanying drawings and in conjunction with the embodiments.

It should be noted that the terms "first", "second" etc., in the description, claims, and accompanying drawings of embodiments of the present invention are used to distinguish similar objects, and are not necessarily used to describe a specific sequence or precedence order.

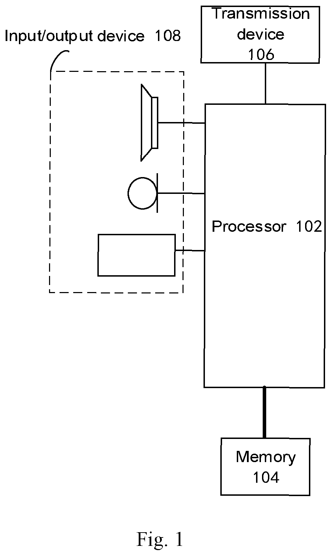

Method embodiments provided in the embodiments of the present invention can be executed in a mobile terminal, a computer terminal or a similar computing apparatus. Taking running on a mobile terminal as an example, Fig. 1 is a structural block diagram of hardware of the mobile terminal for a data processing method according to embodiments of the present invention. As shown in Fig. 1, the mobile terminal may include: one or more (only one shown in Fig. 1) processors 102 (the processors 102 may include, but not limited to processing apparatuses such as a microprocessor, MCU or a programmable logic device, FPGA); and a memory 104 for storing data; wherein the mobile terminal can further include a transmission device 106 and an input/output device 108 for communication functions. A person of ordinary skill in the art would understand that the structure as shown in Fig. 1 is merely exemplary, and does not limit the structure of the mobile terminal. For example, the mobile terminal may also include more or fewer assemblies than those shown in Fig. 1, or have different configurations from that shown in Fig. 1.

The memory 104 may be used for storing a computer program, for example, a software program and module of application software, such as a computer program corresponding to the data processing method in embodiments of the present invention; and the processor 102 executes various functional applications and data processing by running the computer program stored in the memory 104, i.e. implementing the described method. The memory 104 may include a high-speed random access memory, and may further include a non-transitory memory, such as one or more magnetic storage apparatuses, flash memories or other non-transitory solid-state memories. In some examples, the memory 104 may further include memories remotely arranged with respect to the processors 102, and these remote memories may be connected to the mobile terminal via a network. Examples of the network include, but not limited to the Internet, an intranet, a local area network, a mobile communication network and combinations thereof.

The transmission device 106 is configured to receive or send data via a network. Specific examples of the network may include a wireless network provided by a communication provider of the mobile terminal. In one example, the transmission device 106 includes a network interface controller (NIC for short) which may be connected to other network devices by means of a base station, thereby being able to communicate with the Internet. In one example, the transmission device 106 may be a radio frequency (RF for short) module which is configured to communicate with the Internet in a wireless manner.

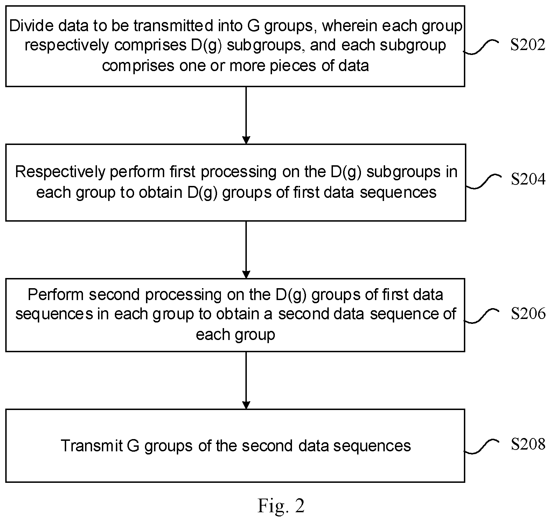

Some embodiments of the present invention provide a data processing method. Fig. 2 is a flowchart of a data processing method according to embodiments of the present invention. As shown in Fig. 2, the flow includes the following steps:
At S202, data to be transmitted is divided into G groups, wherein each group respectively includes D(g) subgroups, each subgroup includes one or more pieces of data, g is an identifier corresponding to each group, g = 1, 2, ..., G, and D(g)>= 1;
At S204, first processing is respectively performed on the D(g) subgroups in each group, to obtain D(g) groups of first data sequences;
At S206, second processing is performed on the D(g) groups of first data sequences in each group to obtain a second data sequence of each group; and
At S208, G groups of the second data sequences is transmitted.

In the S202, once the data to be transmitted is divided into G groups, group 1, group 2, ..., group G may be obtained according to a grouping order, wherein each group includes a certain number of subgroups, and the number of subgroups included in each group can be represented by the serial number of each group; for example, the number of subgroups included in the first group may be represented by D(1), and the number of subgroups included in the second group may be represented by D(2), by such analogy, the number of subgroups included in the last group can be represented by D(G), wherein the numbers of subgroups included in different groups can be the same or different, or the numbers of subgroups included in some groups are the same, but some are different, and the number of subgroups included in each group may be configured by default, may also be configured according to a certain rule, and may also be configured on the basis of actual application scenarios or data transmission requirements.

In the S204, when the first processing is performed on the D(g) subgroups within each group, the first processing may be simultaneously performed on the subgroups included in each of the G groups, and may also be sequentially executed according to the serial number sequence or sequentially executed in batches. Certainly, an execution sequence or an execution manner may also be determined on the basis of actual situations or certain constraint conditions, and a specific execution sequence is not limited. In addition, when the first processing is performed on the D(g) subgroups within each group, the first processing may be simultaneously executed on the plurality of subgroups, the first processing may also be sequentially executed on the plurality of subgroups according to a sequence, and may also be sequentially executed in batches (i.e. first processing is simultaneously executed on subgroups in each batch, and the first processing is executed on subgroups in different batches successively. Certainly, an execution sequence or an execution manner may also be determined on the basis of actual situations or certain constraint conditions, and a specific execution sequence is not limited.

In the S206, when the foregoing second processing is performed on the D(g) groups of first data sequences, the processing sequence thereof is also not limited, and for a specific processing sequence, reference may be made to the processing sequence in S204, which is not described herein again.

In the described embodiments, after the foregoing first processing and second processing are performed on the data to be transmitted, a filtering or windowing operation may be successively performed. In this case, filtering of each piece of data to be transmitted can be implemented using a filtering or windowing operation of lower complexity.

The operations in S202 to S208 may be performed by a node in a network, for example, a terminal, a base station, or another network element capable of transmitting data via a network, which is not limited in the embodiments of the present invention.

According to the embodiments above, the data to be transmitted is grouped, the grouped data is processed multiple times, and then data sequences obtained after the processing are transmitted. Multiple processing on data can facilitate subsequent filtering on transmitted data by using a less complex operation, thereby effectively reducing interference generated during data transmission, and improving the accuracy of data transmission.

In an exemplary embodiment, the G groups of second data sequences being transmitted includes: third processing is performed on the G groups of second data sequences to obtain one group target data sequence; and the target data sequence is transmitted by means of a transmitting node. In this embodiment, the described third processing can be executed before the G groups of second data sequences are transmitted, so as to obtain one group target data sequence; and during transmission, the one group target data sequences can be directly transmitted, and it should also be noted that the G groups of second data sequences can also be directly transmitted, and whether to process the G groups of second data sequences can be flexibly adjusted on the basis of actual situations. In this embodiment, the transmitting node may be a node that performs the foregoing third processing operation, and may also be another node having a data transmission capability. When the transmitting node and the node that performs the foregoing third processing operation are different nodes, a direct or indirect connection relationship may exist between the transmitting node and the node, thereby facilitating sending of the target data sequences to the transmitting node for transmission. Optionally, the second data sequences may be time domain data sequences, and correspondingly, target data sequences obtained by processing the G groups of time domain data sequences may also be one time domain data sequence. When the transmitting node is used to transmit the time domain data sequence, the time domain data sequence may be transmitted on a physical resource with a certain frequency domain bandwidth and/or a certain time domain length, wherein the certain frequency domain bandwidth and/or certain time domain length may be preconfigured, or may be determined after negotiation with a receiving end, and may further be determined on the basis of actual transmission scenarios or other factors.

In an exemplary embodiment, third processing being performed on the G groups of second data sequences to obtain one group target data sequence includes: an addition operation is performed on the G groups of second data sequences to obtain the one group target data sequence. In this embodiment, the adding operation may be performed on the G groups of second data sequences. In practical applications, the adding operation may be only performed on some of the second data sequences, or the addition operation is performed on the G groups of second data sequences in batches, thereby also reducing the number of times of data transmission.

In an exemplary embodiment, first processing being respectively performed on the D(g) subgroups in each group includes: for at least one of the subgroups included in the D(g) subgroups in each group, one of the following processing is performed: first inverse fast Fourier transform, inserting a reference sequence, and a zero insertion operation. In this embodiment, the first inverse fast Fourier transform may be an inverse oversampled Fourier transform. In addition, when the operation of inserting a reference sequence is performed, the reference sequence is a reference sequence known to the receiving end. In addition, a sending end and a receiving end may pre-negotiate to determine a specific reference sequence, thereby facilitating the receiving end to acquire correct transmission data.

In an exemplary embodiment, second processing being performed on the D(g) groups of first data sequences in each group to obtain a second data sequence of each group includes: a second inverse fast Fourier transform operation or a frequency shift addition operation is performed on the D(g) groups of first data sequences in each group to obtain a second data sequence of each group. In this embodiment, the second inverse fast Fourier transform may be an inverse oversampled Fourier transform.

In an exemplary embodiment, second processing being performed on the D(g) groups of first data sequences in each group includes: a second inverse fast Fourier transform operation or a frequency shift addition operation is performed on the D(g) groups of first data sequences in each group; and after performing the second inverse fast Fourier transform or frequency shift addition operation, a first filtering operation or a first windowing operation is performed to obtain the second data sequence of each group. It should be noted that the second processing performed on the first data sequences may include only the second inverse fast Fourier transform operation or the frequency shift addition operation, and may also additionally include other operations, for example, additionally include the first filtering operation or the first windowing operation, etc. Whether to execute the first filtering operation or the first windowing operation may be determined on the basis of actual application scenarios and factors such as data processing capability.

In an exemplary embodiment, among the G groups of data to be transmitted, at least one group of data to be transmitted is modulated using a different waveform type than other groups. In this embodiment, the waveform types adopted by the other groups may be the same or different.

In an exemplary embodiment, among the G groups of data to be transmitted, at least one group of data to be transmitted is modulated using a multicarrier waveform. In this embodiment, waveform types adopted by groups that are not adjusted by using the multicarrier waveform may be the same or different.

In an exemplary embodiment, among the G groups of data to be transmitted, the correspondingly D(g) subgroups included in each group are modulated using the same waveform. In this embodiment, waveforms used by subgroups included in each group are the same, and waveforms used by subgroups included in different groups may be the same or different, or waveforms used by subgroups included in some of groups are the same, and some are different.

In an exemplary embodiment, among the G groups of data to be transmitted, the number of data in the D(g) subgroups included in each group is the same or different, and after a zero insertion operation and/or an operation of inserting a reference sequence is performed on the data in the D(g) subgroups included in each group, the number of the data becomes the same, that is, the D(g) groups of first data sequences have the same length.

In an exemplary embodiment, among the G groups of data to be transmitted, the number of data in the D(g) subgroups included in each group is the same or different, and after the first processing is performed on the data in the D(g) subgroups included in each group, the number of the data becomes the same, that is, the D(g) groups of first data sequences have the same length.

In an exemplary embodiment, the number of IFFT points of the inverse fast Fourier transform is greater than or equal to the number of data included in a subgroup subjected to the inverse fast Fourier transform.

In an exemplary embodiment, the number of IFFT points of the inverse fast Fourier transform is smaller than or equal to a predetermined multiple of the number of data included in a subgroup subjected to the inverse fast Fourier transform. In this embodiment, the predetermined multiple may be flexibly set, for example, double, or four times, or the like.

In an exemplary embodiment, before an inverse fast Fourier transform is performed on at least one subgroup among the D(g) subgroups in each group, the method further includes: a Fourier transform operation is performed on at least one subgroup among the D(g) subgroups in each group. That is, the Fourier transform is first performed on at least one subgroup, and then the inverse fast Fourier transform is performed.

In an exemplary embodiment, the operation of inserting a reference sequence being performed on at least one subgroup among the D(g) subgroups in each group includes: the reference sequence is inserted at the beginning and the end of data in at least one subgroup among the D(g) subgroups in each group. In this embodiment, the reference sequence may be pre-determined by negotiation with the receiving end, that is, the receiving end knows specific content included in the reference sequence.

In an exemplary embodiment, the second inverse fast Fourier transformation being performed on the D(g) groups of first data sequences of each group includes: the second inverse fast Fourier transform is performed each time for each set of D(g) pieces of data, wherein each set of D(g) pieces of data respectively comes from the D(g) groups of first data sequences of each group. In this embodiment, the second inverse fast Fourier transform is used for D(g) pieces of data each time, wherein the D(g) pieces of data subjected to the second inverse fast Fourier transform each time is respectively extracted from the D(g) groups of first data sequences (i.e. one piece of data is extracted from each first data sequence each time).

In an exemplary embodiment, the second inverse fast Fourier transformation being performed on the D(g) groups of first data sequences of each group includes: after adding a predetermined number of zeros to the D(g) groups of first data sequences in each group, the second inverse fast Fourier transform is performed, i.e. the second inverse fast Fourier transform is performed after adding a predetermined number of zeros to each set of D(g) pieces of data. Alternatively, the second inverse fast Fourier transform is performed after adding a plurality of data sequences of 0 to the D(g) groups of first data sequences in each group.

In an exemplary embodiment, the second data sequence is a sequence formed by serially connecting a plurality of time domain data sequences generated by the second inverse fast Fourier transform, or the second data sequence is a sequence formed by serially connecting a plurality of repeated time domain data sequences, each generated by the second inverse fast Fourier transform.

In an exemplary embodiment, the first filtering operation includes a first single-phase filtering operation or a first polyphase filtering operation. In this embodiment, when the first filtering operation is performed on the D(g) groups of first data sequences, filtering types used by each of the first data sequences may be the same. For example, the first single-phase filtering operation is used to all the first data sequences, or the first multi-phase filtering operation is used to all the first data sequences, or some of the first data sequences are subjected to the same or different filtering operations. For example, some of the first data sequences are subjected to the first single-phase filtering operation and some other of the first data sequences are subjected to the first polyphase filtering operation. Which form is specifically used for filtering can be flexibly adjusted on the basis of actual situations.

In an exemplary embodiment, in cases where the first filtering operation is executed, filtering functions used for executing the first filtering operation between different groups are the same or different; and in cases where the first windowing operation is executed, windowing functions used for executing the first windowing operation between different groups are the same or different.

In an exemplary embodiment, before the addition operation is performed on the G groups of second data sequences, the method further includes: a dot product operation is performed on at least one group of data sequences among the G groups of the second data sequences, wherein a sequence to be multiplied in the dot product operation is a sequence with equal magnitudes and sequentially changing phases.

In an exemplary embodiment, after the addition operation is performed on the G groups of second data sequences to obtain one group target data sequence, the method further includes: a second windowing operation or a second filtering operation is performed on the one group target data sequence.

In an exemplary embodiment, the second filtering operation includes a second single-phase filtering operation or a second polyphase filtering operation. In this embodiment, the second filtering operation and the foregoing first filtering operation may be filtering operations of the same type, and definitely, may also be filtering operations of different types.

In an exemplary embodiment, the filtering functions used in the second polyphase filtering operation may include at least one of a root raised cosine function, a or raised cosine function, or a rectangular function, an IOTA function, and a 1+D function.

In an exemplary embodiment, the filtering functions used in the first polyphase filtering operation may include at least one of a root raised cosine function, or a raised cosine function, or a rectangular function, an IOTA function, and a 1 + D function.

In an exemplary embodiment, the data to be transmitted includes at least one of constellation point modulated data and reference signal data.

In the foregoing embodiments, after the data to be transmitted is divided into G groups, achieving that: (1) windowing or filtering may be performed between different groups by using filtering functions of different parameters; (2) different waveforms can be used to modulate different groups; and (3) it is facilitated using the same filtering function to perform unified windowing or filtering in the same group, and processing complexity is reduced.

Hereinafter, some embodiments of the present invention will be described in detail in combination with specific embodiments.

### Specific embodiment I:

In this embodiment, dividing data to be transmitted into two groups is taken as an example for description. Certainly, in actual applications, the data to be transmitted may also be divided into more groups, for example, four groups, eight groups, ten groups, etc.

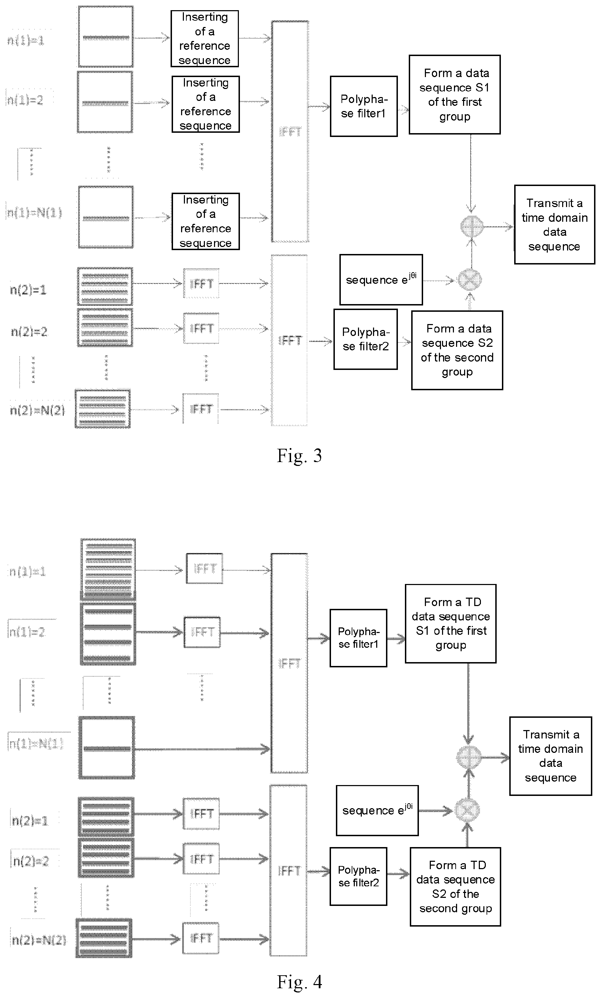

As shown in Fig. 3, the data to be transmitted is divided into two groups, a first group is modulated using a single-carrier waveform, and a second group is modulated using a multi-carrier waveform.

The first group is subdivided into G(1) subgroups each modulated using a single-carrier waveform. The data of each subgroup may be selected to be inserted into a reference sequence or zeros, or selected to be subjected to Fourier transform and inverse fast Fourier transform. In this embodiment, the data of each subgroup is selected to be inserted into the reference sequence. After the first processing is performed on the first group, G(1) groups of first data sequences with the same length are formed. The G(1) groups of first data sequences are subjected to second processing to form a group of data sequences. In this embodiment, the second processing is an inverse fast Fourier transform. The inverse fast Fourier transformation is that: one inverse fast Fourier transform is performed on each set of G(1) pieces of data, the G(1) pieces of data being respectively from G(1) groups of data sequences. One inverse fast Fourier transform being performed on each set of G(1) pieces of data further includes: a plurality of pieces of zero data is added, and then the inverse fast Fourier transform is performed, wherein the number of IFFT points of the inverse fast Fourier transform is greater than G(1). One inverse fast Fourier transform is performed on each set of G(1) pieces of data to form one time domain data sequence, and the time domain data sequences generated by a plurality of inverse fast Fourier transforms are serially connected to form a data sequence S1.

The second group is subdivided into G(2) subgroups each modulated using a multicarrier waveform. The inverse fast Fourier transform may be selected for performing on data of each subgroup. After the first processing is performed on the second group, G(2) groups of first data sequences with the same length are formed. The G(2) groups of first data sequences are subjected to second processing to form a group of data sequences. In this embodiment, the second processing is an inverse fast Fourier transform, and time domain data sequences generated by a plurality of inverse fast Fourier transforms are serially connected to form a data sequence S2.

The second processing may further include: a filtering operation is performed after the inverse fast Fourier transform. The filtering is a polyphase filtering operation, and waveform functions used are different or the same (the cases where the waveform functions are different include, for example, different waveform function types, or the same waveform function type, but specific parameters are different).

The data sequence S1 and the data sequence S2 are then subjected to third processing to form a data sequence, said processing including: a dot product operation, and an addition operation. The dot product operation is that: a dot product operation may be performed on the data sequence S1, or a dot product operation may be performed on the data sequence S2. In this embodiment, the data sequence S2 is dot-multiplied by a sequence e^{jθi} (where i = 0, 1, 2, ...) and then added to the data sequence S1 to form a time domain data sequence.

In the case that no filtering or windowing operation is involved in the second processing and the required wave functions are identical, in the third processing, a filtering or windowing operation is also performed on the time domain data sequence.

In this embodiment, the time domain data sequence formed in the described manner may be transmitted via a transmitting node, wherein when the time domain data sequence is transmitted by means of the transmitting node, the time domain data sequence may be transmitted on a physical resource having a certain frequency domain bandwidth and a certain time domain length.

### Specific embodiment II:

In this embodiment, dividing data to be transmitted into two groups is also taken as an example for description. Certainly, in actual applications, the data to be transmitted may also be divided into more groups, for example, four groups, eight groups, ten groups, etc.

As shown in Fig. 4, the data to be transmitted is divided into two groups, the first group is mixed modulated using different waveform types, and the second group is modulated using a multi-carrier waveform.

The first group is subdivided into G(1) subgroups, each modulated with a single-carrier or multi-carrier waveform. The data of each subgroup may be selected to be inserted into a reference sequence or zeros, or selected to be subjected to inverse fast Fourier transform, or no processing. After first processing is performed on the first group, G(1) groups of first data sequences with the same length are formed. The G(1) groups of first data sequences are subjected to second processing to form a group of data sequences. In this embodiment, the second processing is an inverse fast Fourier transform. The inverse fast Fourier transformation is that: one inverse fast Fourier transform is performed on each set of G(1) pieces of data, the G(1) pieces of data being respectively from G(1) groups of data sequences. One inverse fast Fourier transform being performed on each set of G(1) pieces of data further includes: a plurality of pieces of zero data is added, and then the inverse fast Fourier transform is performed, wherein the number of IFFT points of the inverse fast Fourier transform is greater than G(1). One inverse fast Fourier transform is performed on each set of G(1) pieces of data to form one time domain data sequence, and the time domain data sequences generated by a plurality of inverse fast Fourier transforms are serially connected to form a data sequence S1.

The second group is subdivided into G(2) subgroups each modulated using a multicarrier waveform. The inverse fast Fourier transform may be selected for performing on data of each subgroup. After the first processing is performed on the second group, G(2) groups of first data sequences with the same length are formed. The G(2) groups of first data sequences are subjected to a second processing to form a group of data sequences. In this embodiment, the second processing is an inverse fast Fourier transform, and time domain data sequences generated by a plurality of inverse fast Fourier transforms are serially connected to form a data sequence S2.

The second processing may further include: a filtering operation is performed after the inverse fast Fourier transform. The filtering is a polyphase filtering operation, and waveform functions used are different (for example, different waveform function types, or the same waveform function type, but specific parameters are different).

The data sequence S1 and the data sequence S2 are then subjected to third processing to form a data sequence, said processing including: a dot product operation, and an addition operation. The dot product operation is that: a dot product operation may be performed on the data sequence S1, or a dot product operation may be performed on the data sequence S2. In this embodiment, the data sequence S2 is dot-multiplied by a sequence e^{jθi} (where i = 0, 1, 2, ...) and then added to the data sequence S1 to form a time domain data sequence.

In this embodiment, the time domain data sequence formed in the described manner may be transmitted via a transmitting node, wherein when the time domain data sequence is transmitted by means of the transmitting node, the time domain data sequence may be transmitted on a physical resource having a certain frequency domain bandwidth and a certain time domain length.

### Specific embodiment III:

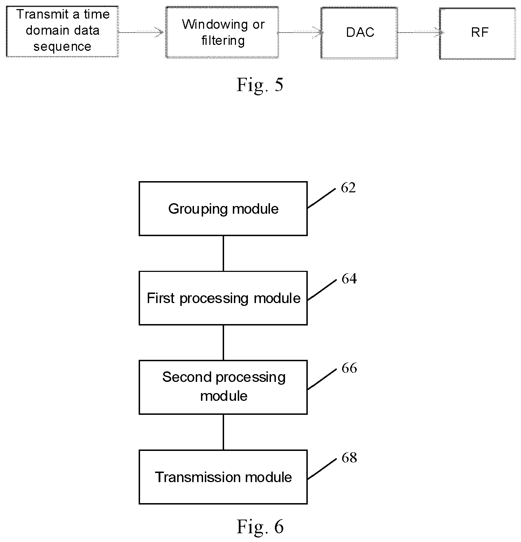

As shown in figure 5, the time domain data sequence being transmitted further includes: digital-to-analogue conversion (DAC) and radio frequency (RF) link transmission process is performed on the time domain data sequence.

From the description of the described embodiments, a person skilled in the art would have been able to clearly understand that the methods in the described embodiments may be implemented by using software and necessary general hardware platforms, and of course may also be implemented using hardware, but in many cases, the former is a better embodiment. On the basis of such understanding, the portion of the technical solution of the present invention that contributes in essence or to the related art may be embodied in the form of a software product stored in a storage medium (such as an ROM/RAM, a magnetic disk and an optical disc); and the storage medium includes several instructions to cause a terminal device (which may be a mobile phone, a computer, a server or a network device, etc.) to perform the method according to the various embodiments of the present invention.

The present embodiment further provides a data processing apparatus, the apparatus is configured to implement the described embodiments and optional embodiments, and what has been described will not be repeated again. As used below, the term "module" may implement a combination of software and/or hardware of predetermined functions. Although the apparatus described in the following embodiments is optional implemented in software, implementation in hardware or a combination of software and hardware is also possible and could have been conceived.

Fig. 6 is a structural block diagram of a data processing apparatus according to some embodiments of the present invention. As shown in Fig. 6, the apparatus includes:
a grouping module 62, configured to divide data to be transmitted into G groups, wherein each group includes D(g) subgroups, each subgroup includes one or more pieces of data, g is an identifier corresponding to each group, g = 1, 2, ..., G, and D(g)>= 1;
a first processing module 64, configured to respectively perform first processing on the D(g) subgroups in each group to obtain D(g) groups of first data sequences;
a second processing module 66, configured to perform second processing on the D(g) groups of first data sequences in each group to obtain a second data sequence of each group; and
a transmission module 68, configured to transmit G groups of the second data sequences.

In an exemplary embodiment, the transmission module 68 includes: a first processing unit, configured to perform third processing on the G groups of second data sequences to obtain one target data sequence; and a transmission unit, configured to transmit the target data sequence by means of a transmitting node.

In an exemplary embodiment, the first processing unit is configured to perform third processing on the G groups of second data sequences in the following manner to obtain one target data sequence; and perform an addition operation on the G groups of second data sequences to obtain the one target data sequence.

In an exemplary embodiment, the first processing module 64 includes: a second processing unit, configured to perform, on at least one subgroup included in the D(g) subgroups in each group, one processing of the following: first inverse fast Fourier transform, inserting a reference sequence, and a zero insertion operation.

In an exemplary embodiment, the second processing module 66 includes: a third processing unit, configured to perform a second inverse fast Fourier transform or a frequency shift addition operation on the D(g) groups of first data sequences in each group to obtain a second data sequence of each group.

In an exemplary embodiment, the second processing module 66 includes: a fourth processing unit, configured to perform a second inverse fast Fourier transform or a frequency shift addition operation on the D(g) groups of first data sequences in each group; a fifth processing unit, configured to perform a first filtering operation or a first windowing operation after the second inverse fast Fourier transform or frequency shift addition operation is performed, to obtain the second data sequence of each group.

In an exemplary embodiment, among the G groups of data to be transmitted, at least one group of data to be transmitted is modulated using a different waveform type than other groups.

In an exemplary embodiment, among the G groups of data to be transmitted, at least one group of data to be transmitted is modulated using a multicarrier waveform.

In an exemplary embodiment, among the G groups of data to be transmitted, the correspondingly D(g) subgroups included in each group are modulated using the same waveform.

In an exemplary embodiment, in the G groups of data to be transmitted, the number of data in the D(g) subgroups included in each group is the same or different, and after a zero insertion operation and/or an operation of inserting a reference sequence is performed on the data in the D(g) subgroups included in each group, the number of the data becomes the same.

In an exemplary embodiment, in the data to be transmitted in group G, the number of data in the D(g) subgroups included in each group is the same or different, and after the first processing is performed on the data in the D(g) subgroups included in each group, the number of the data becomes the same.

In an exemplary embodiment, the number of IFFT points of the inverse fast Fourier transform is greater than or equal to the number of data included in a subgroup that is subjected to the inverse Fourier transform.

In an exemplary embodiment, the number of IFFT points of the inverse fast Fourier transform is smaller than or equal to a predetermined multiple of the number of data included in a subgroup that is subjected to the inverse fast Fourier transform.

In an exemplary embodiment, the apparatus further includes: a first operating module configured to perform a Fourier transform operation on at least one subgroup among the D(g) subgroups in each group before performing an inverse fast Fourier transform on at least one subgroup among the D(g) subgroups in each group.

In an exemplary embodiment, the second processing unit is configured to perform the operation of inserting a reference sequence for at least one subgroup among the D(g) subgroups in each group by inserting the reference sequence at the beginning and the end of data in at least one subgroup among the D(g) subgroups in each group.

In an exemplary embodiment, the third processing unit is configured to perform the second inverse fast Fourier transform on the D(g) groups of first data sequences of each group by performing the second inverse fast Fourier transform each time on each set of D(g) pieces of data, wherein each set of D(g) pieces of data comes from the D(g) groups of first data sequences of each group.

In an exemplary embodiment, the third processing unit is configured to perform the second inverse fast Fourier transform on the D(g) groups of first data sequences in each group by adding a predetermined number of zeros to the D(g) groups of first data sequences in each group and then performing the second inverse fast Fourier transform.

In an exemplary embodiment, the second data sequence is a sequence formed by serially connecting a plurality of time domain data sequences generated by the second inverse fast Fourier transform, or the second data sequence is a sequence formed by serially connecting a plurality of repeated time domain data sequences, each generated by the second inverse fast Fourier transform.

In an exemplary embodiment, the first filtering operation includes a first single-phase filtering operation or a first polyphase filtering operation.

In an exemplary embodiment, in cases where the first filtering operation is executed, filtering functions used for executing the first filtering operation between different groups are the same or different; and in cases where the first windowing operation is executed, windowing functions used for executing the first windowing operation between different groups are the same or different.

In an exemplary embodiment, the apparatus further includes a second operation module, configured to perform, before performing an addition operation on the G groups of second data sequences, a dot product operation on at least one group of data sequences among the G groups of the second data sequences, wherein a sequence to be multiplied in the dot product operation is a sequence with equal magnitudes and sequentially changing phases.

In an exemplary embodiment, the apparatus further includes a third operation module, configured to perform a second windowing operation or a second filtering operation on the one group target data sequence after an adding operation is performed on the G groups of second data sequences to obtain the one group target data sequence.

In an exemplary embodiment, the second filtering operation includes a second single-phase filtering operation or a second polyphase filtering operation.

In an exemplary embodiment, the filtering functions used in the second polyphase filtering operation may include at least one of a root raised cosine function, a or raised cosine function, or a rectangular function, an IOTA function, and a 1+D function.

In an exemplary embodiment, the filtering functions used in the first polyphase filtering operation may include at least one of a root raised cosine function, or a raised cosine function, or a rectangular function, an IOTA function, and a 1 + D function.

In an exemplary embodiment, the data to be transmitted includes at least one of constellation point modulated data and reference signal data.

It should be noted that the described modules may be implemented by software or hardware. The latter may be implemented in the following manner, but is not limited thereto: all the described modules are located in the same processor; or all the modules are located in different processors in any arbitrary combination manner.

The embodiments of the present invention further provide a computer-readable storage medium, the computer-readable storage medium storing a computer program, wherein the computer program is configured to execute the steps in any one of the method embodiments when running.

In an exemplary embodiment, the computer-readable storage medium may include, but is not limited to: various media that can store a computer program, such as a USB flash drive, a Read-Only Memory (ROM for short), a Random Access Memory (RAM for short), a removable hard disk, a magnetic disk, or an optical disc. The embodiments of the present invention further provide an electronic apparatus, including a memory and a processor; wherein the memory stores a computer program, and the processor is configured to run the computer program to execute the steps in any one of the method embodiments.

In an exemplary embodiment, the electronic apparatus can further include a transmission device and an input/output device, wherein the transmission device is connected to the processor, and the input/output device is connected to the processor.

For a specific example in the present embodiment, reference can be made to the examples described in the embodiments and exemplary embodiments, and thus they will not be repeated again in the present embodiment.

Obviously, a person skilled in the art will understand that various modules or various steps in some embodiments of the present invention can be implemented by means of a general computing device, can be integrated on one single computing device, or distributed over a network consisting of a plurality of computing devices, and the various modules or various steps can be implemented by means of program codes executable by a computing device, and thus can be stored in a storage device and executed by a computing device, and in some cases, the shown or described steps may be executed in a sequence different from that shown herein, or they are manufactured into integrated circuit modules, or multiple modules or steps therein are manufactured into a single integrated circuit module. Thus, some embodiments of the present invention are not limited to any specific combination of hardware and software.

The content above is only optional embodiments of the present invention and is not intended to limit some embodiments of the present invention. For a person skilled in the art, some embodiments of the present invention may have various modifications and variations. Any modifications, equivalent replacements, improvements, etc. made within the principle of some embodiments of the present invention shall all fall within the scope of protection of the present invention.

## Claims

1. A data processing method, comprising:
dividing data to be transmitted into G groups, wherein each group respectively comprises D,g, subgroups, each subgroup comprises one or more pieces of data, g is an identifier corresponding to each group, g = 1, 2, ... , G, and D,g, >= 1;
respectively performing first processing on the D,g, subgroups in each group to obtain D,g, groups of first data sequences;
performing second processing on the D,g, groups of the first data sequences in each group to obtain a second data sequence of each group; and
transmitting G groups of the second data sequences.

2. The processing method according to claim 1, transmitting G groups of the second data sequences comprises:
performing third processing on the G groups of the second data sequences to obtain one group target data sequence; and
transmitting the target data sequence by a transmitting node.

3. The method according to claim 2, wherein performing third processing on the G groups of the second data sequences to obtain one group target data sequence comprises:
performing an addition operation on the G groups of the second data sequences to obtain the one group target data sequence.

4. The processing method according to claim 1, wherein respectively performing first processing on the D,g, subgroups in each group comprises:
performing, on at least one of the subgroups among the D,g, subgroups in each group, processing of one of the following: first inverse fast Fourier transform, inserting a reference sequence, and a zero insertion operation.

5. The processing method according to claim 1, wherein performing second processing on the D,g, groups of the first data sequences in each group to obtain a second data sequence of each group comprises:
performing second inverse fast Fourier transform or a frequency shift addition operation on the D,g, groups of the first data sequences in each group to obtain the second data sequence of each group.

6. The processing method according to claim 1, wherein performing second processing on the D,g, groups of the first data sequences in each group comprises:
performing second inverse fast Fourier transform or a frequency shift addition operation on the D,g, groups of the first data sequences in each group; and
after performing the second inverse fast Fourier transform or the frequency shift addition operation, performing a first filtering operation or a first windowing operation to obtain the second data sequence of each group.

7. The processing method according to claim 1, wherein among G groups of the data to be transmitted, at least one group of data to be transmitted is modulated using a different waveform type than other groups of data to be transmitted.

8. The processing method according to claim 1, wherein among G groups of the data to be transmitted, at least one group of data to be transmitted is modulated using a multi-carrier waveform.

9. The processing method according to claim 1, wherein in G groups of the data to be transmitted, the D,g, subgroups correspondingly comprised in each group are modulated using the same waveform.

10. The processing method according to claim 1, wherein in G groups of the data to be transmitted, a number of data in the D,g, subgroups comprised in each group is the same or different, and after a zero insertion operation and/or an operation of inserting a reference sequence is performed on the data in the D,g, subgroups comprised in each group, the number of the data becomes the same.

11. The processing method according to claim 1, wherein in G groups of the data to be transmitted, a number of data in the D,g, subgroups comprised in each group is the same or different, and after the first processing is performed on the data in the D,g, subgroups comprised in each group, the number of the data becomes the same.

12. The processing method according to claim 4, wherein a number of IFFT points of the Inverse Fast Fourier Transform is greater than or equal to the number of data comprised in a subgroup that is subjected to the inverse fast Fourier transform.

13. The processing method according to claim 4, wherein a number of IFFT points of the inverse fast Fourier transform is smaller than or equal to a predetermined multiple of the number of data comprised in a subgroup that is subjected to the inverse fast Fourier transform.

14. The processing method according to claim 4, wherein before performing the inverse fast Fourier transform on at least one subgroup among the D,g, subgroups in each group, the method further comprises:
performing a Fourier transform operation on the at least one subgroup among the D,g, subgroups in each group.

15. The processing method according to claim 4, wherein performing the operation of inserting a reference sequence on at least one subgroup among the D,g, subgroups in each group comprises:
inserting the reference sequence at the beginning and the end of data in the at least one subgroup among the D,g, subgroups in each group.

16. The processing method according to claim 5, wherein performing the second inverse fast Fourier transform on the D,g, groups of the first data sequences in each group comprises:
performing the second inverse fast Fourier transform each time on each set of D,g, pieces of data, wherein each set of D,g, pieces of data respectively comes from the D,g, groups of the first data sequences of each group.

17. The processing method according to claim 5, wherein performing the second inverse fast Fourier transform on the D,g, groups of the first data sequences in each group comprises:
performing the second inverse fast Fourier transform after adding a predetermined number of zeros to the D,g, groups of the first data sequences in each group.

18. The processing method according to claim 5, wherein the second data sequence is a sequence formed by serially connecting a plurality of time domain data sequences generated by the second inverse fast Fourier transform, or the second data sequence is a sequence formed by serially connecting a plurality of repeated time domain data sequences, each generated by the second inverse fast Fourier transform.

19. The processing method according to claim 6, wherein the first filtering operation comprises a first single-phase filtering operation or a first polyphase filtering operation.

20. The processing method according to claim 6, wherein
in a case where the first filtering operation is executed, filtering functions used for executing the first filtering operation between different groups are the same or different; and
in a case where the first windowing operation is executed, windowing functions used for executing the first windowing operation between different groups are the same or different.

21. The processing method according to claim 3, wherein before performing the addition operation on the G groups of the second data sequences, the method further comprises:
performing a dot product operation on at least one group of data sequences among the G groups of the second data sequences, wherein a sequence to be multiplied in the dot product operation is a sequence with equal magnitudes and sequentially changing phases.

22. The processing method according to claim 3, wherein after performing an addition operation on the G groups of the second data sequences to obtain the one group target data sequence, the method further comprises:
performing a second windowing operation or a second filtering operation on the one group target data sequence.

23. The processing method according to claim 22, wherein the second filtering operation comprises a second single-phase filtering operation or a second polyphase filtering operation.

24. The processing method according to claim 23, wherein filtering functions used in the second polyphase filtering operation comprise at least one of the following:
a root raised cosine function, or raised cosine function, or rectangular function, IOTA function, and 1+D function.

25. The processing method according to claim 19, wherein filtering functions used in the first polyphase filtering operation comprise at least one of the following:
a root raised cosine function, or raised cosine function, or rectangular function, IOTA function, and 1+D function.

26. The processing method according to any one of claims 1 to 25, wherein the data to be transmitted comprises at least one of the following:
constellation point modulated data, and reference signal data.

27. A data processing apparatus, comprising:
a grouping module, configured to divide data to be transmitted into G groups, wherein each group comprises D,g, subgroups, each subgroup comprises one or more pieces of data, g is an identifier corresponding to each group, g = 1, 2, ..., G, and D,g, >= 1;
a first processing module, configured to respectively perform first processing on D,g, subgroups in each group to obtain D,g, groups of first data sequences;
a second processing module, configured to perform second processing on the D,g, groups of the first data sequences in each group to obtain a second data sequence of each group; and
a transmission module, configured to transmit G groups of the second data sequences.

28. A computer-readable storage medium, the computer-readable storage medium storing a computer program which, when executed by a processor, implements the steps of the method according to any one of claims 1 to 26.

29. An electronic apparatus, comprising a memory, a processor, and a computer program which is stored in the memory and executed by the processor to implement the steps of the method according to any one of claims 1 to 26.
